# EUROPEAN PATENT APPLICATION

(11) **EP 2 541 375 A1**
(43) Date of publication of application: **02.01.2013**
(21) Application number: 10846592.3
(22) Date of filing: 22.10.2010
(51) Int. Cl.: G06F 3/041, G02F 1/133, G02F 1/1333, G02F 1/13357, G02F 1/136, G09F 9/00, G09F 9/30, G09G 3/20, G09G 3/34, G09G 3/36

(54) **DISPLAY DEVICE HAVING OPTICAL SENSORS**

(30) Priority: 26.02.2010 JP 2010042254
(71) Applicant: Sharp Kabushiki Kaisha, Osaka-shi, Osaka 545-8522 (JP)
(72) Inventor: YUKI, Ryuzo, Osaka-shi, Osaka 545-8522 (JP); USUKURA, Naru, Osaka-shi, Osaka 545-8522 (JP); KATOH, Hiromi, Osaka-shi, Osaka 545-8522 (JP)
(74) Representative: Goddar, Heinz J.
(86) International application number: PCT/JP2010/068708
(87) International publication number: WO 2011/104929

(57) **Abstract**

A liquid crystal display device is provided with a liquid crystal panel 20 including a plurality of optical sensors, a white backlight 31, and an infrared backlight 32. The infrared backlight 32 is turned on and off with predetermined timings. One part of the optical sensors detect light at the time of turn-on of the infrared backlight 32, and the other part of the optical sensors detect light at the time of turn-off of the infrared backlight 32. One part of the optical sensors is specified as operating optical sensors. A drive circuit of the liquid crystal panel 20 includes a black insertion unit 11, and drives the liquid crystal panel 20 so as to partially perform black display corresponding to the operating optical sensors. This widens an effective region of the optical sensor included in the display device.

## Description

### TECHNICAL FIELD

The present invention relates to a display device, and particularly relates to a display device with optical sensors in which a plurality of optical sensors are provided on a display panel.

### BACKGROUND ART

In recent years, electronic equipment operable by touching a screen with a finger, a pen, or the like is in widespread use. Further, as a method to detect a touched position within a display screen, there is known a method of providing a plurality of optical sensors on a display panel and performing image processing on an input image obtained by the optical sensors. Such a display device with optical sensors is required to detect a touched position with high accuracy without being influenced by external light.

A variety of methods for enhancing the accuracy in detecting the touched position have hitherto been devised. For example, Patent Document 1 describes a method of providing a backlight which emits infrared light, and Patent Document 2 describes a method of providing a filter which transmits infrared light and blocks visible light, on a path of light incident on the optical sensors. Patent Document 3 describes a method of displaying a black image with a certain timing, and displaying an image (e.g., blue image) having higher brightness than the black image with another timing. Patent Document 4 describes a method of providing a first light emitting means for emitting invisible light and a second light emitting means for emitting visible light, to parallelly execute light emission control of two light emitting means. Patent Document 5 describes a method of sequentially scanning liquid crystal display elements in a predetermined period within one field to write display video signal, and sequentially scanning the liquid crystal display elements in another period within one field to write video signal for read which represents a blue image or the like. Patent Document 6 describes a method of switching display data used before reading to fixed data that represents a white image, a blue image or the like.

### PRIOR ART DOCUMENTS

### PATENT DOCUMENTS

[Patent Document 1] International Publication Pamphlet No. WO 2009/110294
[Patent Document 2] International Publication Pamphlet No. WO 2009/110293
[Patent Document 3] Japanese Laid-Open Patent Publication No. 2008-286914
[Patent Document 4] Japanese Laid-Open Patent Publication No. 2009-157605
[Patent Document 5] Japanese Laid-Open Patent Publication No. 2008-209645
[Patent Document 6] International Publication Pamphlet No. WO 2009/104667

### SUMMARY OF THE INVENTION

### PROBLEMS TO BE SOLVED BY THE INVENTION

In a typical display device provided with a backlight, light emitted from the backlight (light from the backlight) is reflected inside the display panel. Further, external light incident on the display panel is also reflected by the surface of backlight, and then reflected inside the display panel. For this reason, there may be a problem with the display device with optical sensors in that one part of the light reflected inside the display panel is incident on the optical sensor as a noise to narrow an effective region (range of a usable light amount) of the optical sensors required for detecting a touched position.

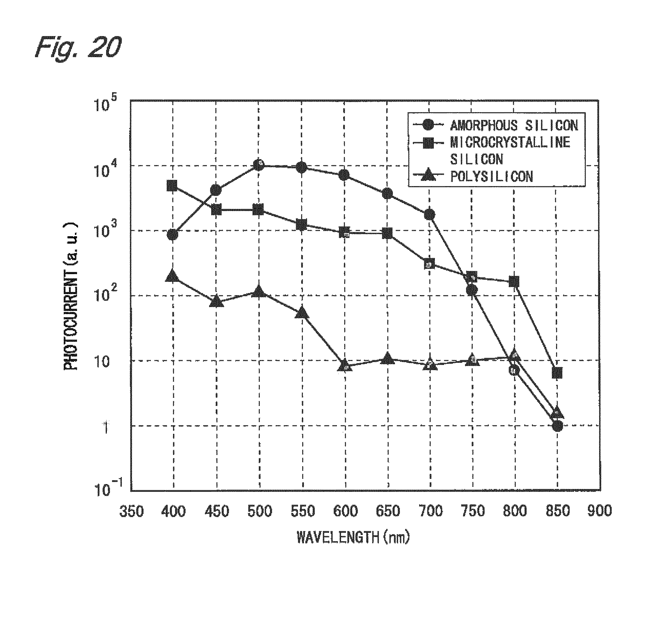

This problem is significant when the optical sensor is formed of amorphous silicon. Fig. 20 is a view showing spectral sensitivity characteristics of optical sensors formed of polysilicon, microcrystalline silicon, and amorphous silicon. As shown in Fig. 20, a ratio between a sensitivity when a wavelength is 850 nm to a sensitivity when the wavelength is 550 nm is about 1: 100 in the optical sensor formed of polysilicon, and is about 1: 10,000 in the optical sensor formed of amorphous silicon. For this reason, when optical sensors are formed of polysilicon and amorphous silicon so as to have the same level of sensitivity to infrared light, the sensitivity of the optical sensor formed of amorphous silicon to white light is about 100 times as high as that of the optical sensor formed of polysilicon. Therefore, in the case of forming the optical sensor of amorphous silicon, when even a tiny amount of a visible light component contained in light from the white backlight or external light is reflected inside the display panel and incident on the optical sensor, output of the optical sensor is saturated. For such a reason, it is extremely difficult to use the optical sensor formed of amorphous silicon in the case of using infrared light for detecting a touched position.

Even the conventional display devices with optical sensors described in Patent Documents 1 to 6 are unable to solve the problem that light reflected inside the display panel is incident on the optical sensor to narrow the effective region of the optical sensor. Although Patent Documents 5 and 6 describe the method of displaying a white image or a blue image, even when such an image containing a color component with high brightness is displayed, light cannot be prevented from being incident on the optical sensor.

Accordingly, an object of the present invention is to provide a display device with optical sensors, in which the optical sensors have a wide effective region.

### MEANS FOR SOLVING THE PROBLEMS

According to a first aspect of the present invention, there is provided a display device provided with a plurality of optical sensors, including: a display panel that includes a plurality of optical sensors arranged two-dimensionally; a light source that irradiates light on the rear surface of the display panel; and a drive circuit that drives the display panel based on an input video signal, wherein one part of the optical sensors is specified as operating optical sensors, and the drive circuit drives the display panel so as to partially perform black display corresponding to the operating optical sensors.

According to a second aspect of the present invention, in the first aspect of the present invention, a first light source that emits visible light and a second light source that emits infrared light are provided as the light source, the optical sensors include one that detects light in a first detection period and one that detects light in a second detection period, the first light source is turned off corresponding to a first range including the operating optical sensors in the first and second detection periods, and the second light source is turned on corresponding to a second range including the operating optical sensors in the first detection period and fully turned off in the second detection period.

According to a third aspect of the present invention, in the second aspect of the present invention, the first and second detection periods are set to the same length once in one frame period.

According to a fourth aspect of the present invention, in the second aspect of the present invention, the first light source is fully turned off in the first and second detection periods.

According to a fifth aspect of the present invention, in the second aspect of the present invention, the second light source is fully turned on in the first detection period.

According to a sixth aspect of the present invention, in the second aspect of the present invention, the first light source is partially turned off corresponding to the operating optical sensors in the first and second detection periods.

According to a seventh aspect of the present invention, in the second aspect of the present invention, the second light source is partially turned on corresponding to the operating optical sensors in the first detection period.

According to an eighth aspect of the present invention, in the first aspect of the present invention, the drive circuit includes a black insertion unit which replaces one part of the input video signal with data for black display, and drives the display panel based on the video signal outputted from the black insertion unit.

According to a ninth aspect of the present invention, in the first aspect of the present invention, the detection region for specifying the operating optical sensors has a size in accordance with a detection target object.

According to a tenth aspect of the present invention, in the first aspect of the present invention, the detection region for specifying the operating optical sensors is set upon approach of a detection target object to the display panel.

According to an eleventh aspect of the present invention, in the first aspect of the present invention, a first light source that emits visible light and a second light source that emits infrared light are provided as the light source, the first light source is partially turned off corresponding to a band-like region that moves in a predetermined direction within a display screen, and the optical sensors corresponding to the band-like region detect light.

According to a twelfth aspect of the present invention, in the eleventh aspect of the present invention, the second light source is fully turned on.

According to a thirteenth aspect of the present invention, in the eleventh aspect of the present invention, the second light source is partially turned on corresponding to the band-like region.

According to a fourteenth aspect of the present invention, in the first aspect of the present invention, the optical sensor is formed of amorphous silicon.

According to a fifteenth aspect of the present invention, in the first aspect of the present invention, the optical sensor is formed of microcrystalline silicon.

According to a sixteenth aspect of the present invention, in the first aspect of the present invention, the optical sensor is formed of polysilicon.

### EFFECTS OF THE INVENTION

According to the first aspect of the present invention, black display is partially performed corresponding to the operating optical sensors, whereby it is possible to prevent light reflected inside the display panel from being incident on the operating optical sensor, so as to widen the effective region of the optical sensor.

According to the second aspect of the present invention, a light amount at the time of turn-on of the second light source and a light amount at the time of turn-off the second light source are detected, whereby it is possible to calculate a difference therebetween, so as to obtain an input image not influenced by external light. Further, the first light source is turned off corresponding to the range including the operating optical sensors in the first and second detection periods, whereby it is possible to prevent visible light emitted from the first light source from being incident on the operating optical sensor, so as to reliably widen the effective region of the optical sensor.

According to the third aspect of the present invention, the first and second detection periods are set to the same length once in one frame period, whereby it is possible to obtain an input image not influenced by external light in each frame period.

According to the fourth aspect of the present invention, it is possible to configure the first light source easily.

According to the fifth aspect of the present invention, it is possible to configure the second light source easily.

According to the sixth aspect of the present invention, the first light source is partially turned off corresponding to the operating optical sensors, whereby it is possible to turn on the first light source and perform display in the remaining part, so as to reduce an influence to be exerted on the display.

According to the seventh aspect of the present invention, the second light source is partially turned on corresponding to the operating optical sensor, whereby it is possible to reduce power consumption of the second light source.

According to the eighth aspect of the present invention, the black insertion unit is used, whereby it is possible to easily configure the display device that partially performs black display.

According to the ninth aspect of the present invention, a size of a detection region is switched in accordance with a detection target object, whereby it is possible to preferably switch the range for performing black display, so as to preferably reduce an influence to be exerted on the display in accordance with the detection target object.

According to the tenth aspect of the present invention, the detection region is set upon approach of the detection target object to the display panel, whereby it is possible to preferably reduce an influence to be exerted on display in accordance with a distance between the detection target object and the display panel.

According to the eleventh aspect of the present invention, the first light source is turned off corresponding to a band-like region and the optical sensors corresponding to the band-like region detect light, whereby it is possible to prevent visible light emitted from the first light source from being incident on the optical sensor that is detecting light, so as to reliably widen the effective region of the optical sensor.

According to the twelfth aspect of the present invention, it is possible to configure the second light source easily.

According to the thirteenth aspect of the present invention, the second light source is partially turned off corresponding to the band-like region, whereby it is possible to reduce power consumption of the second light source.

According to the fourteenth aspect of the present invention, the optical sensor is formed of amorphous silicon, whereby it is possible to enhance sensitivity of the optical sensor, so as to apply the optical sensor to a utility form that requires high sensitivity.

According to the fifteenth aspect of the present invention, the optical sensor is formed of microcrystalline silicon, whereby it is possible to form the optical sensor with some high sensitivity and some wide linear region, so as to apply the optical sensor to a variety of utility forms.

According to the sixteenth aspect of the present invention, the optical sensor is formed of polysilicon, whereby it is possible to widen a linear region of the optical sensors, so as to apply the optical sensor to a utility form that requires a wide effective region.

### BRIEF DESCRIPTION OF THE DRAWINGS

Fig. 1 is a block diagram showing a configuration of a liquid crystal display device according to a first embodiment of the present invention.
Fig. 2A is an expanded plan view of a liquid crystal panel shown in Fig. 1.
Fig. 2B is a sectional view along line X-X' of Fig. 2A.
Fig. 2C is a sectional view along line Y-Y' of Fig. 2A.
Fig. 3 is a view showing an arrangement of sensor pixel circuits of the liquid crystal display device shown in Fig. 1.
Fig. 4 is a view showing timing for each kind of processing in the liquid crystal display device shown in Fig. 1.
Fig. 5 is a circuit diagram of the sensor pixel circuit of the liquid crystal display device shown in Fig. 1.
Fig. 6 is a signal waveform diagram of the liquid crystal panel of the liquid crystal display device shown in Fig. 1.
Fig. 7 is a view showing operations of the sensor pixel circuit of the liquid crystal display device shown in Fig. 1.
Fig. 8 is a signal waveform diagram of the sensor pixel circuit of the liquid crystal display device shown in Fig. 1.
Fig. 9A is a diagram showing a constitution example of a backlight of the liquid crystal display device shown in Fig. 1.
Fig. 9B is a diagram showing another constitution example of the backlight of the liquid crystal display device shown in Fig. 1.
Fig. 9C is a diagram showing another constitution example of the backlight of the liquid crystal display device shown in Fig. 1.
Fig. 9D is a diagram showing another constitution example of the backlight of the liquid crystal display device shown in Fig. 1.
Fig. 9E is a diagram showing another constitution example of the backlight of the liquid crystal display device shown in Fig. 1.
Fig. 9F is a diagram showing another constitution example of the backlight of the liquid crystal display device shown in Fig. 1.
Fig. 9G is a sectional view of the backlight shown in Fig. 9F.
Fig. 10 is a view showing an example for setting a detection region in the liquid crystal display device shown in Fig. 1.
Fig. 11 is a view showing paths of light incident on the optical sensor in the liquid crystal display device shown in Fig. 1.
Fig. 12 is a view showing effective regions of optical sensors formed of amorphous silicon.
Fig. 13 is a view showing a first application example of the liquid crystal display device shown in Fig. 1.
Fig. 14 is a view showing a second application example of the liquid crystal display device shown in Fig. 1.
Fig. 15A is a perspective view of a backlight with a tandem structure.
Fig. 15B is a sectional view of the backlight with the tandem structure.
Fig. 15C is a view showing a tandem-type light guide plate.
Fig. 16 is a view showing an arrangement of sensor pixel circuits of the liquid crystal display device according to a third embodiment of the present invention.
Fig. 17 is a view showing timing for each kind of processing in the liquid crystal display device according to the third embodiment.
Fig. 18 is a view showing a light detection range in the liquid crystal display device according to the third embodiment.
Fig. 19 is a circuit diagram of the sensor pixel circuit of the liquid crystal display device according to the third embodiment.
Fig. 20 is a view showing spectral sensitivity characteristics of liquid crystal panels formed of a variety of materials.

### MODES FOR CARRYING OUT THE INVENTION

### (First Embodiment)

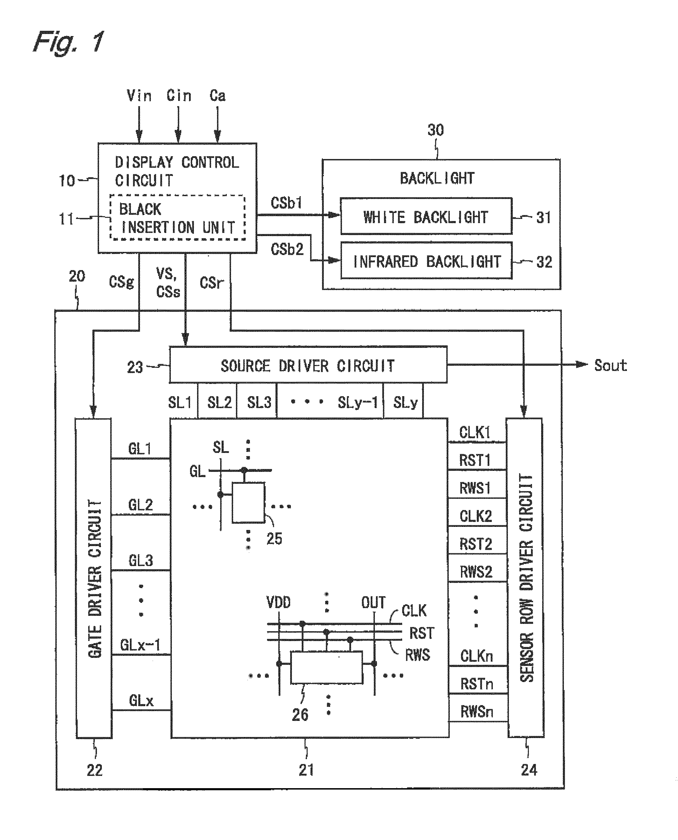

Fig. 1 is a block diagram showing a configuration of a liquid crystal display device according to a first embodiment of the present invention. The liquid crystal display device shown in Fig. 1 includes a display control circuit 10, a liquid crystal panel 20, and a backlight 30. This liquid crystal display device has a function to display an image on the liquid crystal panel 20 and a function to detect light incident on the liquid crystal panel 20. Hereinafter, it is assumed that x and y are integers not smaller than 2, m and n are even numbers, and a frame rate of the liquid crystal display device is 60 frames/sec. Further, in order to identify a signal on a signal line, the same name as a name of the signal line is used for the signal (e.g., a signal on a clock signal CLK is referred to as a clock signal CLK).

A video signal Vin, a timing control signal Cin and a detection region control signal Ca are supplied from the outside to the liquid crystal display device shown in Fig. 1. Based on these signals, the display control circuit 10 outputs a video signal VS, control signals CSg, CSs and CSr to the liquid crystal panel 20, and outputs control signals CSb1 and CSb2 to the backlight 30. The display control circuit 10 includes a black insertion unit 11 in order to partially perform black display on the display screen. Based on the detection region control signal Ca, the black insertion unit 11 replaces one part of the video signal Vin (or a signal obtained by performing signal processing on the video signal Vin) with data for black display (hereinafter referred to as black data), and outputs the video signal VS after black insertion (detailed later).

The backlight 30 is provided on the rear surface side of the liquid crystal panel 20, and irradiates light to the rear surface of the liquid crystal panel 20. The backlight 30 includes a white backlight 31 that emits white light (visible light) for display and an infrared backlight 32 that emits infrared light for light detection. The white backlight 31 functions as a first light source, and the infrared backlight 32 functions as a second light source. The white backlight 31 is turned on when the control signal CSb1 is at a high level, and the infrared backlight 32 is turned on when the control signal CSb2 is at the high level.

The liquid crystal panel 20 includes a pixel region 21, a gate driver circuit 22, a source driver circuit 23, and a sensor row driver circuit 24. The pixel region 21 is provided with x gate lines GL1 to GLx, y source lines SL1 to SLy, (x x y) display pixel circuits 25, and (n x m/2) sensor pixel circuits 26. The gate lines GL1 to GLx are arranged parallel to one another, and the source lines SL1 to SLy are arranged parallel to one another so as to intersect with the gate lines GL1 to GLx perpendicularly. (x x y) display pixel circuits 25 are arranged in the vicinity of intersections of the gate lines GL1 to GLx and the source lines SL1 to SLy.

The pixel region 21 is provided with n clock lines CLK1 to CLKn, n reset lines RST1 to RSTn, and n read lines RWS1 to RWSn in parallel to the gate lines GL1 to GLx. When read from the sensor pixel circuit 26 is performed, m lines selected out of the source lines SL1 to SLy are used as power supply lines VDD1 to VDDm, and the other m lines are used as output lines OUT1 to OUTm.

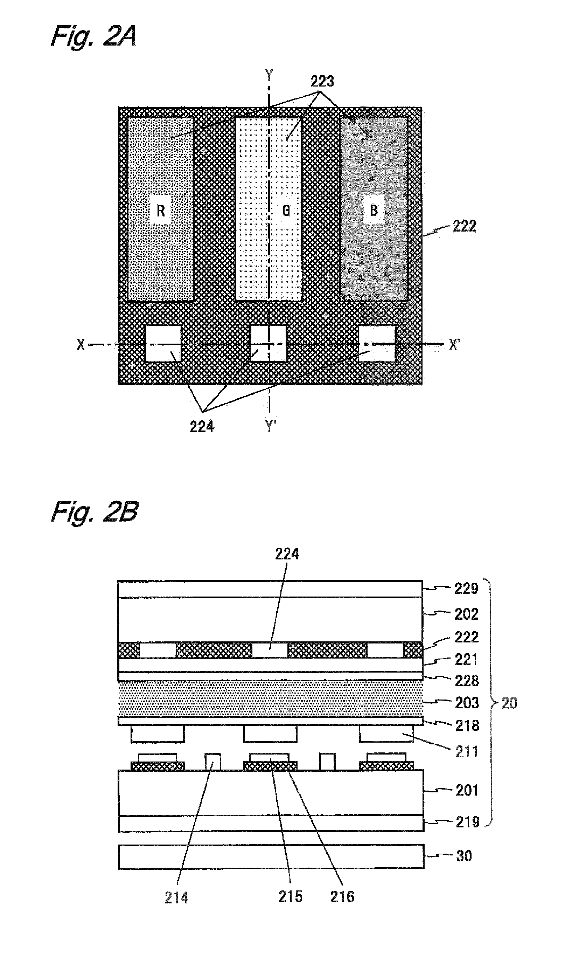

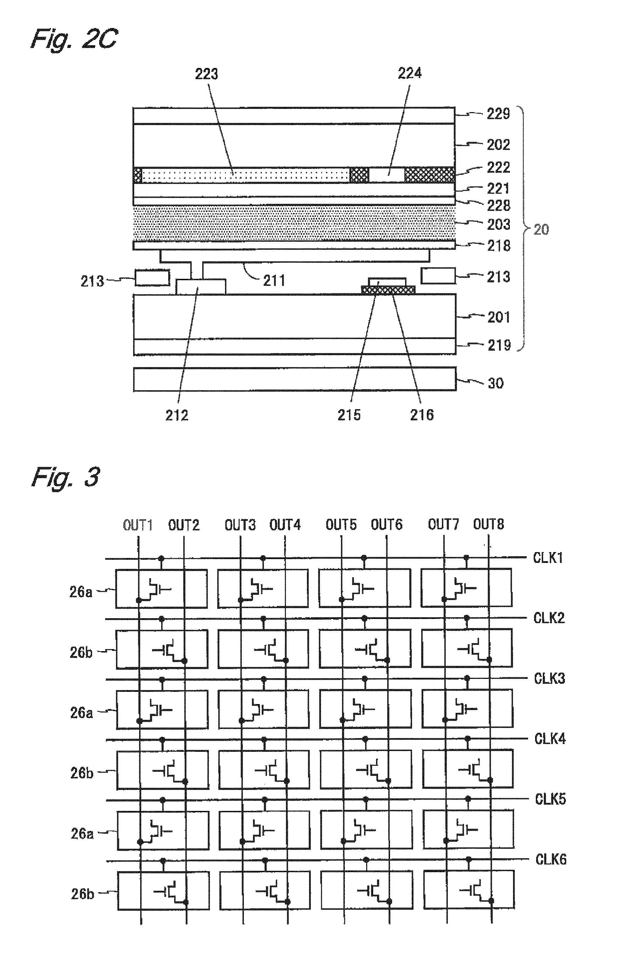

Fig. 2A is an expanded plan view of the liquid crystal panel 20. Fig. 2B is a sectional view along line X-X' of Fig. 2A, and Fig. 2C is a sectional view along line Y-Y' of Fig. 2A. As shown in Figs. 2B and 2C, the liquid crystal panel 20 has a structure of holding a liquid crystal layer 203 between two glass substrates 201 and 202. The glass substrate 201 on the rear surface is provided with a pixel electrode 211, a TFT (Thin Film Transistor) 212, a gate line 213, a source line 214, an optical sensor 215, a light blocking layer 216, and the like. The light blocking layer 216 prevents light emitted from the backlight 30 from being directly incident on the optical sensor 215. A glass substrate 202 on the display surface side is provided with an counter electrode 221, a black matrix 222, a color filter 223, and the like. The black matrix 222 has an opening 224 at a position corresponding to the optical sensor 215. The opening 224 may be filled with a wavelength selection filter or a white color filter. Further, in order to use the liquid crystal display device as a color scanner, three openings 224 may be respectively filled with color filters of three colors RGB. Alignment films 218 and 228 are respectively provided on the surfaces of the glass substrates 201 and 202 which are opposed to each other, and polarizing plates 219 and 229 are respectively provided on the surfaces of the glass substrates 201 and 202 which are not opposed to each other.

Fig. 3 is a view showing an arrangement of the sensor pixel circuits 26 in the pixel region 21. The (n x m/2) sensor pixel circuits 26 include first sensor pixel circuits 26a each detecting light when the infrared backlight 32 is turned on, and second sensor pixel circuits 26b each detecting light when the infrared backlight 32 is turned off. The number of first sensor pixel circuits 26a is the same as the number of second sensor pixel circuits 26b. As shown in Fig. 3, (n × m/4) first sensor pixel circuits 26a are arranged in the vicinities of intersections of odd-numbered clock lines CLK1 to CLKn-1 and odd-numbered output lines OUT1 to OUTm-1. (n × m/4) second sensor pixel circuits 26b are arranged in the vicinities of intersections of even-numbered clock lines CLK2 to CLKn and even-numbered output lines OUT2 to OUTm.

The gate driver circuit 22, the source driver circuit 23, and the sensor row driver circuit 24 constitute a drive circuit of the liquid crystal panel 20, along with the display control circuit 10. The gate driver circuit 22 sequentially selects one gate line out of the gate lines GL1 to GLx based on the control signal CSg, and applies a high-level potential to the selected gate line. Thereby, y display pixel circuits 25 connected to the selected gate line are selected collectively. The source driver circuit 23 applies potentials in accordance with the video signal VS to the source lines SL1 to SLy based on the control signal CSs. The potentials applied to the source lines SL1 to SLy are written into the y display pixel circuits 25 selected by the gate driver circuit 22. By writing the potentials in accordance with the video signal VS to all the display pixel circuits 25 as thus described, it is possible to display a desired image on the liquid crystal panel 20.

The sensor row driver circuit 24 applies a high level potential and a low level potential to the clock lines CLK1 to CLKn based on the control signal CSr (detailed later). Further, the sensor row driver circuit 24 applies a high level potential for reset to odd-numbered reset lines RST1 to RSTn-1 and even-numbered reset lines RST2 to RSTn with different timings based on the control signal CSr. Thereby, the first sensor pixel circuits 26a are reset collectively with a certain timing, and the second sensor pixel circuits 26b are reset collectively with another timing.

Further, the sensor row driver circuit 24 sequentially selects two adjacent read lines out of the read lines RWS1 to RWSn based on the control signal CSr, and applies a high-level, potential for read to the selected read lines. Thereby, m sensor pixel circuits 26 connected to the two selected read lines come into a readable state collectively. At this time, the source driver circuit 23 applies a high-level potential to the power supply lines VDD1 to VDDm. Hence, signals in accordance with amounts of light detected in the respective sensor pixel circuits 26 (hereinafter referred to as sensor signals) are outputted from the m sensor pixel circuits 26 in the readable state to the output lines OUT1 to OUTm.

The source driver circuit 23 includes a difference circuit (not shown) that calculates a difference between an output signal of the first sensor pixel circuit 26a and an output signal of the second sensor pixel circuit 26b. The source driver circuit 23 amplifies the difference in light amount calculated by the difference circuit, and outputs a signal after amplification as a sensor output Sout outside the liquid crystal panel 20. By reading the sensor signals from all the sensor pixel circuits 26 as thus described, it is possible to detect light incident on the liquid crystal panel 20.

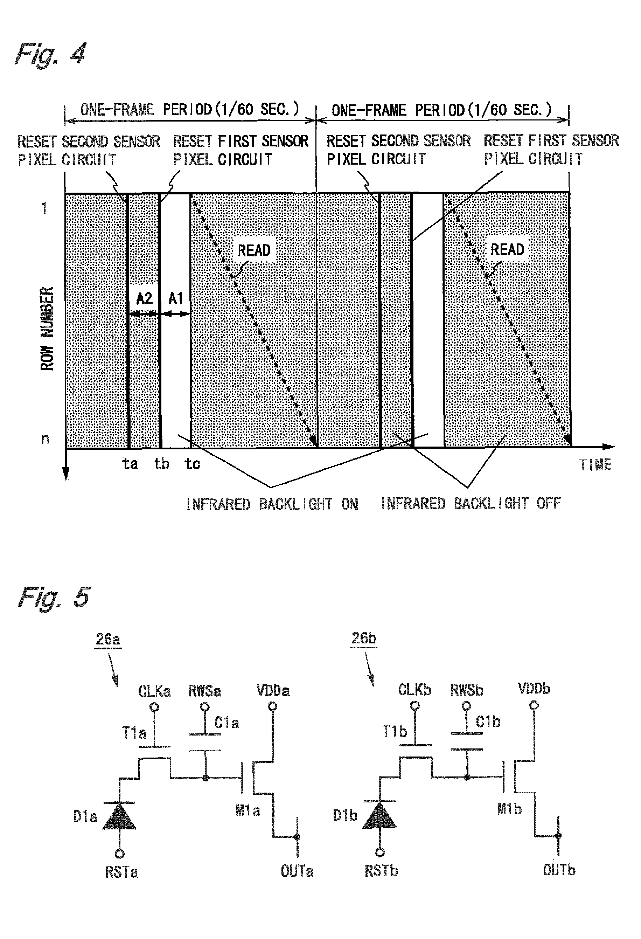

Fig. 4 is a view showing turn-on and turn-off timings of the infrared backlight 32, as well as reset and read timings for the sensor pixel circuit 26. As shown in Fig. 4, the infrared backlight 32 is turned on for a predetermined time once in one frame period, and is turned off in the remaining period. Specifically, the infrared backlight 32 is turned on at a time tb and turned off at a time tc within the one frame period.

Reset for all the first sensor pixel circuits 26a is performed at the time tb, and the first sensor pixel circuit 26a detects light incident in a period A1 (turn-on period of the infrared backlight 32) from the time tb to the time tc. Further, reset for all the second sensor pixel circuits 26b is performed at a time ta, and the second sensor pixel circuit 26b detects light incident in a period A2 (turn-off period of the infrared backlight 32) from the time ta to the time tb. The period A1 and the period A2 are the same length. Read from the first sensor pixel circuit 26a and read from the second sensor pixel circuit 26b are performed parallelly in a line sequential manner after the time tc.

The white backlight 31 is turned off in the light detection period A1 for the first sensor pixel circuit 26a and the light detection period A2 for the second sensor pixel circuit 26b, and is turned on in the remaining period. Specifically, the white backlight 31 is turned off at the time ta within one frame period, and turned on at the time tc.

Fig. 5 is a circuit diagram of the sensor pixel circuit 26. As shown in Fig. 5, in the first sensor pixel circuit 26a, an anode of a photodiode D1a is connected to a reset line RSTa, and a cathode thereof is connected to a source of a transistor T1a. A gate of the transistor T1a is connected to a clock line CLKa, and a drain thereof is connected to a gate of a transistor M1a. A drain of the transistor M1a is connected to a power supply line VDDa, and a source thereof is connected to an output line OUTa. A capacitor C1a is provided between the gate of the transistor M1a and a read line RWSa. In the first sensor pixel circuit 26a, a node connected to the gate of the transistor M1a serves as an accumulation node that accumulates electric charge in accordance with a detected light amount. The photodiode D1a functions as the optical sensor 215 shown in Fig. 2B. The second sensor pixel circuit 26b has the same configuration as the first sensor pixel circuit 26a.

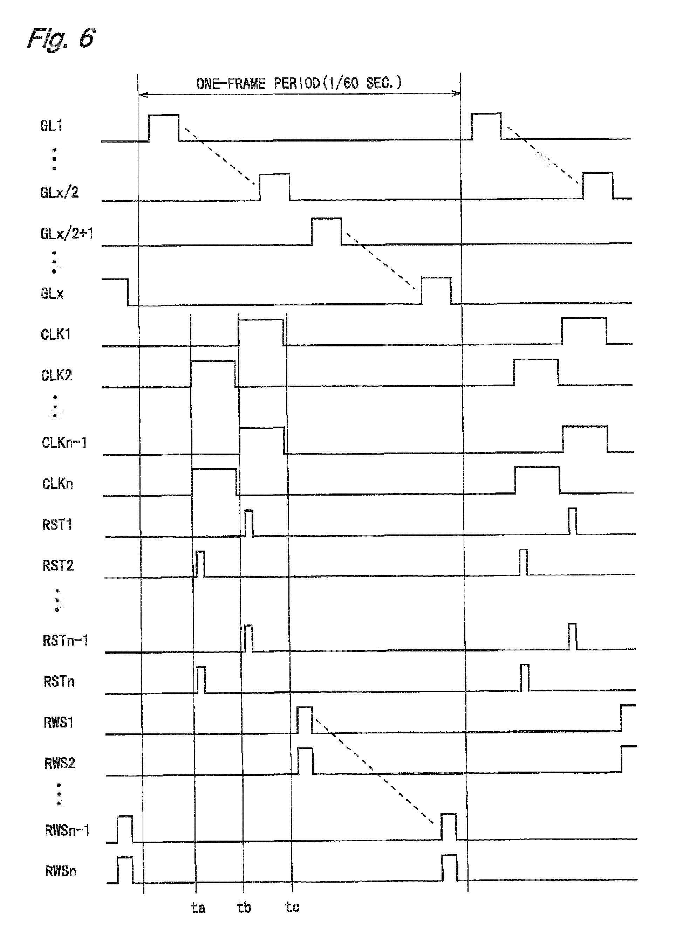

Fig. 6 is a signal waveform diagram of the liquid crystal panel 20. As shown in Fig. 6, each of potentials of the gate lines GL1 to GLx is sequentially at the high level for a predetermined time once in one frame period. Each of odd-numbered clock signals CLK1 to CLKn-1 is at the high level for the period A1 (more specifically, from the time tb to a little before the time tc) once in one frame period. Each of even-numbered clock signals CLK2 to CLKn is at the high level for the period A2 (more specifically, from the time ta to a little before the time tb) once in one frame period. Each of odd-numbered reset signals RST1 to RSTn-1 is at the high level for a predetermined time at the beginning of the period A1 once in one frame period. Each of even-numbered reset signals RST2 to RSTn is at the high level for a predetermined time at the beginning of the period A2 once in one frame period. The read lines RWS1 to RWSn are provided in twos, and the (n/2) pairs of the read lines are sequentially at the high level for a predetermined time after the time tc.

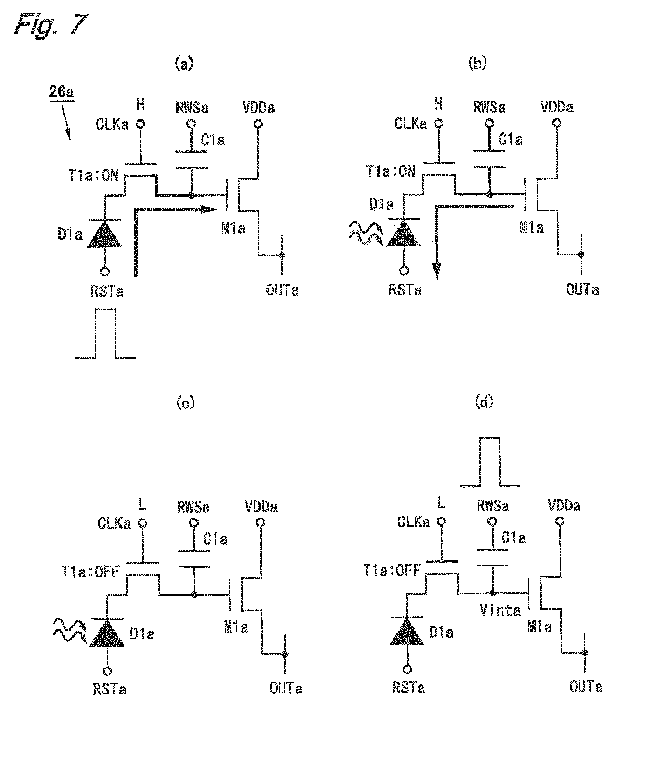

Fig. 7 is a view showing operations of the first sensor pixel circuit 26a. As shown in Fig. 7, the first sensor pixel circuit 26a performs (a) reset, (b) accumulation, (c) retention, and (d) read, in one frame period. The second sensor pixel circuit 26b operates as does the first sensor pixel circuit 26a.

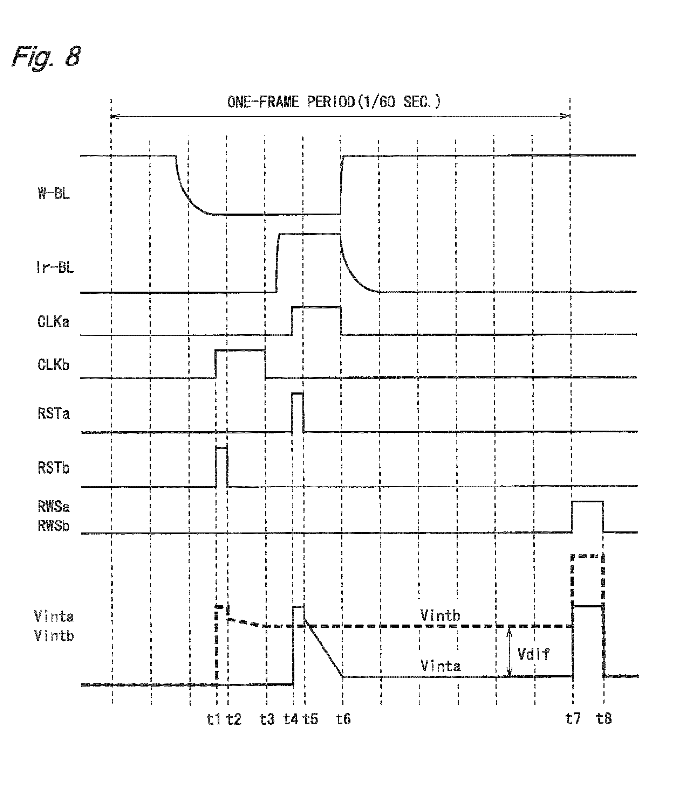

Fig. 8 is a signal waveform diagram of the sensor pixel circuit 26. In Fig. 8, W-BL represents brightness of the white backlight 31, Ir-BL represents brightness of the infrared backlight 32, Vinta represents a potential of the accumulation node in the first sensor pixel circuit 26a, and Vintb represents a potential of the accumulation node in the second sensor pixel circuit 26b. As for the first sensor pixel circuit 26a, a range from a time t4 to a time t5 corresponds to a reset period, a range from the time t5 to a time t6 corresponds to an accumulation period, a range from the time t6 to a time t7 corresponds to a retention period, and a range from the time t7 to a time t8 corresponds to a read period. As for the second sensor pixel circuit 26b, a range from a time t1 to a time t2 corresponds to a reset period, a range from the time t2 to a time t3 corresponds to an accumulation period, a range from the time t3 to the time t7 corresponds to a retention period, and a range from the time t7 to the time t8 corresponds to a read period.

In the reset period of the first sensor pixel circuit 26a, a clock signal CLKa is at the high level, a read signal RWSa is at a low level, and a reset signal RSTa is at the high level for reset. At this time, the transistor T1a is turned on. Therefore, a current flows from the reset line RSTa to the accumulation node via the photodiode D1a and the transistor T1a (Fig. 7 (a)), and the potential Vinta is reset to a predetermined level.

In the accumulation period of the first sensor pixel circuit 26a, the clock signal CLKa is at the high level, and the reset signal RSTa and the read signal RWSa are at the low level. At this time, the transistor T1a is turned on. During this period, when light is incident on the photodiode D1a, a current flows from the accumulation node to the reset line RSTa via the transistor T1a and the photodiode D1a, and electric charge is extracted from the accumulation node (Fig. 7(b)). Hence, the potential Vinta decreases in accordance with an amount of light incident in the period when the clock signal CLKa is at the high level.

In the retention period of the first sensor pixel circuit 26a, the clock signal CLKa, the reset signal RSTa, and the read signal RWSa are at the low level. At this time, the transistor T1a is turned off. During this period, even when light is incident on the photodiode D1a, the potential Vinta remains unchanged since the transistor T1a is turned off (Fig. 7(c)).

In the read period of the first sensor pixel circuit 26a, the clock signal CLKa and the reset signal RSTa are at the low level, and the read signal RWSa is at the high level for read. At this time, the transistor T1a is turned off. The potential Vinta increases by an amount which is (Cqa/Cpa) times as large as an increased amount of a potential of the read signal RWSa, where Cpa is a total capacitance value of the first sensor pixel circuit 26a and Cqa is a capacitance value of the capacitor C1a. The transistor M1a constitutes a source follower amplifier circuit in which a transistor (not shown) included in the source driver circuit 23 taken as a load, and drives the output line OUTa in accordance with the potential Vinta (Fig. 7(d)).

As thus described, a sensor signal corresponding to an amount of light incident during the period when the clock signal CLKa is at the high level (detection period in a period when the infrared backlight 32 is turned on) is read from the first sensor pixel circuit 26a. Similarly, a sensor signal corresponding to an amount of light incident during the period when the clock signal CLKb is at the high level (detection period in a period when the infrared backlight 32 is turned off) is read from the second sensor pixel circuit 26b. The difference between the output signal of the first sensor pixel circuit 26a and the output signal of the second sensor pixel circuit 26b is calculated using the difference circuit included in the source driver circuit 23, whereby it is possible to calculate the difference between the light amount at the time of turn-on of the infrared backlight 32 and the light amount at the time of turn-off of the infrared backlight 32, so as to obtain an input image not influenced by external light.

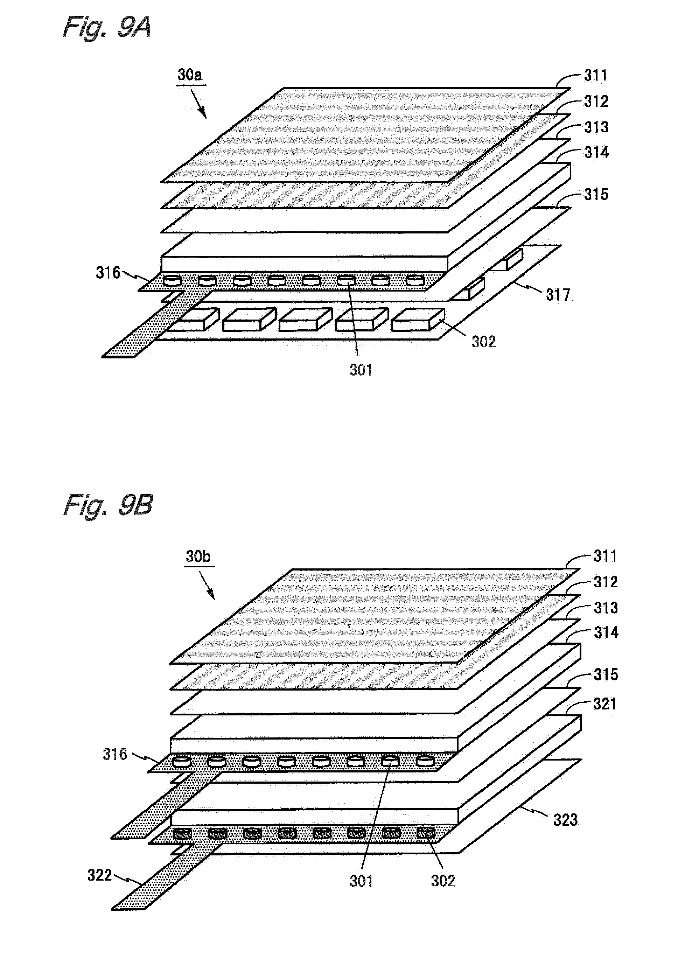

Figs. 9A to 9F are diagrams showing constitution examples of the backlight 30. The backlights 30a to 30f shown in Figs. 9A to 9F each include white LEDs (Light Emitting Diodes) 301 that emit white light, and infrared LEDs 302 that emit infrared light. In the present embodiment, all the white LEDs 301 are turned on when the control signal CSb1 is at the high level, and all the infrared LEDs 302 are turned on when the control signal CSb2 is at the high level.

In the backlight 30a shown in Fig. 9A, two lens sheets 311 and 312 and a diffusion sheet 313 are provided on one surface of a light guide plate 314, and a reflection sheet 315 is provided on the other surface of the light guide plate 314. A flexible printed board 316 having the white LEDs 301 arranged thereon one-dimensionally is provided on at a side surface of the light guide plate 314. A circuit board 317 having the infrared LEDs 302 arranged thereon two-dimensionally is provided on the side of the light guide plate 314 where the reflection sheet 315 is provided. As the reflection sheet 315, one that transmits infrared light and reflects visible light is used. In the backlight 30b shown in Fig. 9B, a light guide plate 321 and a reflection sheet 323 are provided on the side of the light guide plate 314 where the reflection sheet 315 is provided. A flexible printed board 322 having the infrared LEDs 302 arranged thereon one-dimensionally is provided at a side surface of the light guide plate 321. As the reflection sheet 323, one that reflects infrared light is used.

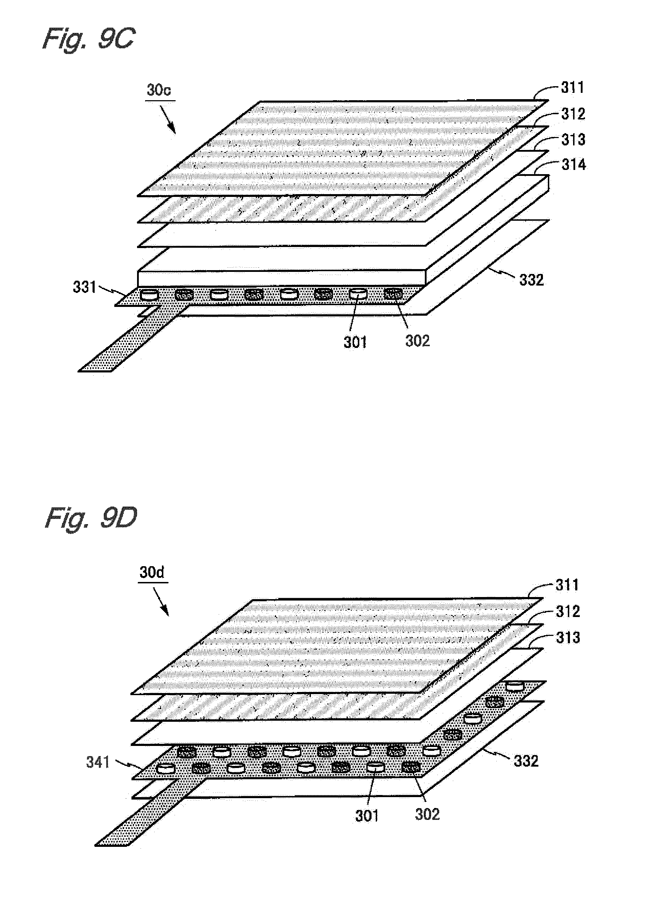

In the backlight 30c shown in Fig. 9C, a flexible printed board 331 having a mixture of the white LEDs 301 and the infrared LEDs 302 arranged thereon one-dimensionally is provided at a side surface of the light guide plate 314. A reflection sheet 332 that reflects visible light and infrared light is provided on the surface of the side of the light guide plate 314 where the diffusion sheet 313 is not provided. In the backlight 30d shown in Fig. 9D, a circuit board 341 having a mixture of the white LEDs 301 and the infrared LEDs 302 arranged thereon two-dimensionally is included. Two lens sheets 311 and 312 and a diffusion sheet 313 are provided on one surface of the circuit board 341, and a reflection sheet 332 is provided on the other surface of the circuit board 341.

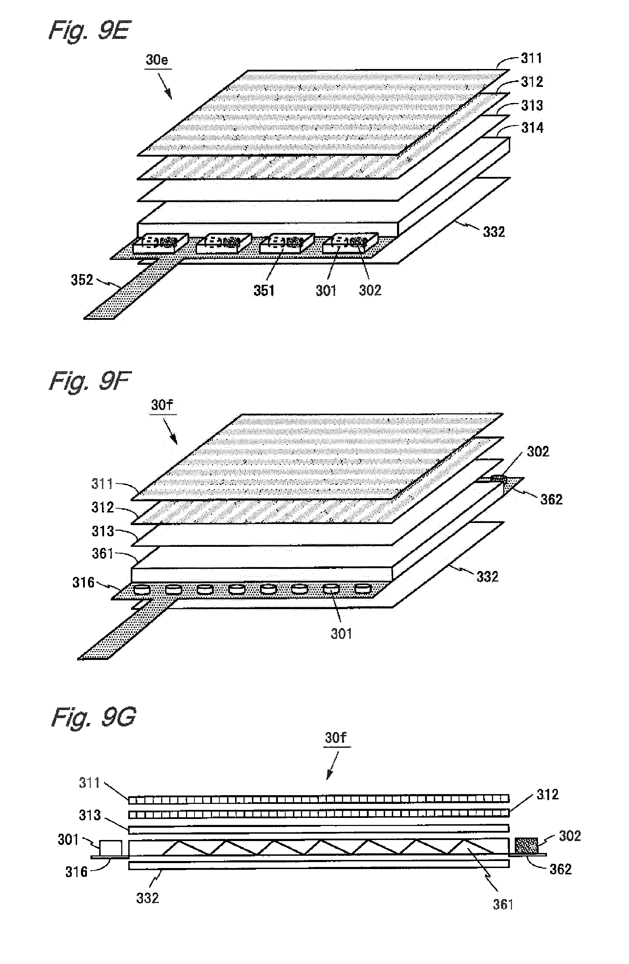

In the backlight 30e shown in Fig. 9E, a flexible printed board 352 having resin packages 351, each of which encloses therein the white LED 301 and the infrared LED 302 together, arranged thereon one-dimensionally is provided at a side surface of the light guide plate 314. In the backlight 30f shown in Fig. 9F, a flexible printed board 316 having the white LEDs 301 arranged thereon one-dimensionally is provided at one side surface of a light guide plate 361, and a flexible printed board 362 having the infrared LEDs 302 arranged thereon one-dimensionally is provided at the opposing side surface of the light guide plate 361. Fig. 9G is a sectional view of the backlight 30f. The light guide plate 361 is processed so as to allow propagation of both the white light incident from the one side surface and the infrared light incident from the side surface on the opposing side.

As thus described, in the liquid crystal display device according to the present embodiment, the periods A1 and A2 are set to the same length once in one frame period, and the sensor pixel circuits 26 include the first sensor pixel circuit 26a that detects light in the period A1 and the second sensor pixel circuit 26b that detects light in the period A2. The white backlight 31 is fully turned off in the periods A1 and A2, and is fully turned on in the remaining period. The infrared backlight 32 is fully turned on in the period A1, and is fully turned off in the remaining period.

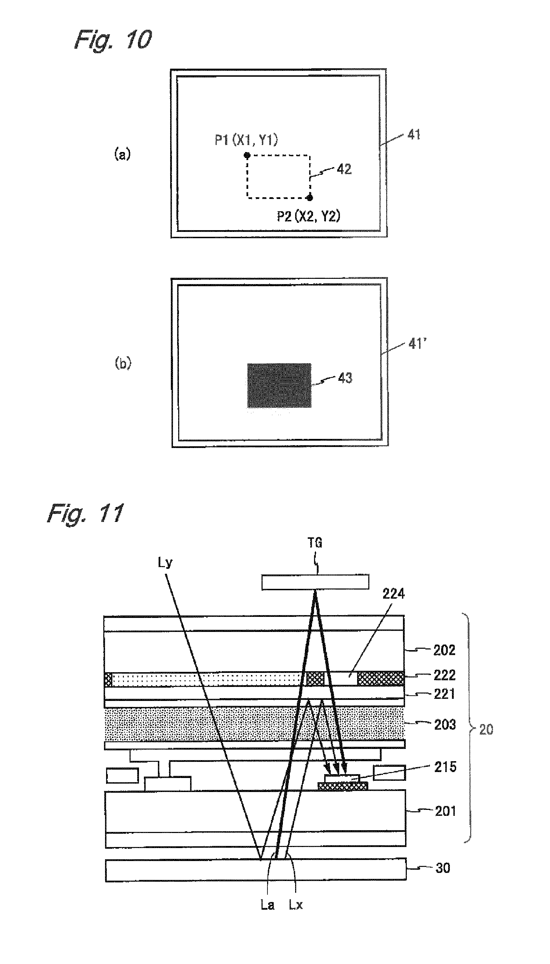

In the liquid crystal display device according to the present embodiment, one part of the plurality of optical sensors 215 provided on the liquid crystal panel 20 is specified as operating optical sensors. A detection region is set on the display screen so as to specify the operating optical sensors. The detection region is set using the detection region control signal Ca. Fig. 10 is a view showing an example for setting the detection region. Coordinates of two points P1 and P2 are specified in a display screen 41 shown in Fig. 10(a) by means of the detection region control signal Ca, thereby setting a rectangular detection region 42. The detection region set on the display screen changes, for example, in each frame period. A shape of the detection region may be arbitrary, and the number of the detection regions set on one display screen may also be arbitrary.

The black insertion unit 11 replaces with black data a potion corresponding to the set detection region among the video signal Vin. In the example shown in Fig. 10, the black insertion unit 11 replaces with black data a potion corresponding to the detection region 42 among the video signal Vin. In this case, based on the video signal VS after black insertion, a display screen 41' is displayed which includes a black region 43 in the position corresponding to the detection region 42 (see Fig. 10(b)). Thereby, black display is partially performed corresponding to the operating optical sensors. Note that although data corresponding to perfect black (data with all color components having the minimum graduation) is preferably used as the black data, data corresponding to a color close to black may also be used.

Hereinafter, effects of the liquid crystal display device according to the present embodiment will be described. Fig. 11 is a view showing paths of light incident on the optical sensor. A detection target object TG shown in Fig. 11 is a finger, a pen or the like having approached the surface of the liquid crystal panel 20. In the liquid crystal display device according to the present embodiment, one part of light (light La) emitted from the backlight 30 is transmitted through the liquid crystal panel 20, reflected by the detection target object TG, and incident on the optical sensor 215 provided on the rear-surface-side glass substrate 201. The opening 224 is provided in the black matrix 222, and only light having passed through the opening 224 is ideally incident on the optical sensor 215.

However, in reality, another part of light (light Lx) emitted from the backlight 30 is reflected by the counter electrode 221 provided on the display-surface-side glass substrate 202, and incident on the optical sensor 215 without passing through the opening 224. Further, one part of external light (light Ly) incident on the liquid crystal panel 20 is reflected by the surface of the backlight 30, and reflected again on the counter electrode 221, to be incident on the optical sensor 215 without passing through the opening 224. As thus described, one part of light reflected inside the liquid crystal panel 20 is incident on the optical sensor 215 as a noise, to narrow the effective region (range of a usable light amount) of the optical sensor required for detecting a touched position. Even when the opening 224 is filled with a wavelength selection filter or a white color filter, this problem cannot be solved.

Accordingly, in the liquid crystal display device according to the present embodiment, the black insertion unit 11 for replacing one part of the video signal Vin with black data is provided, and black display is partially performed corresponding to the operating optical sensors 215. At this time, the liquid crystal layer 203 does not allow light to transmit through the portion performing black display. For this reason, the light La and Lb reflected inside the liquid crystal panel 20 cannot be incident on the operating optical sensor 215. Therefore, in accordance with the liquid crystal display device according to the present embodiment, it is possible to widen the effective region of the optical sensor 215. It is thereby possible to widen an illuminance range in which a touched position is detectable. This effect is significant when the optical sensor 215 is formed using amorphous silicon with high sensitivity to white light.

Further, the white backlight 31 is fully turned off in the period A1 when the first sensor pixel circuit 26a detects light and in the period A2 when the second sensor pixel circuit 26b detects light. For this reason, light from the white backlight which is emitted from the white backlight 31 is not reflected inside the liquid crystal panel 20 to be incident on the optical sensor 215 that is detecting light. Hence, it is possible to reliably widen the effective region of the optical sensor 215.

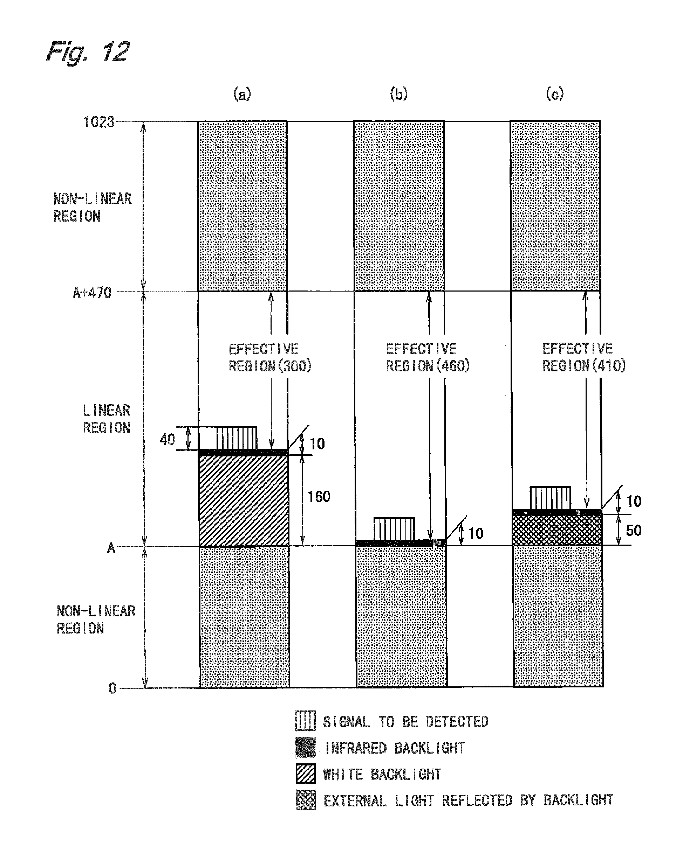

The above effect will be described providing a specific example. Fig. 12 is a view showing effective regions of optical sensors formed of amorphous silicon. The optical sensor is required to be used within a range (linear region) where an output (detected light amount) linearly changes in accordance with an input (incident light amount). Herein, it is assumed that the optical sensor formed of amorphous silicon has a linear region of 470-step gradation.

First, a description will be provided without considering that external light is reflected by the backlight and incident on the optical sensor. When the white backlight and the infrared backlight are turned on, the effective region of the optical sensor can be calculated by subtracting a light amount of the reflected light of the light from the white backlight and a light amount of the reflected light of the light from the infrared backlight, from a light amount of the linear region of the optical sensor. Herein, it is assumed that the light amount of the reflected light of the light from the white backlight corresponds to 160-step gradation, the light amount of the reflected light of the light from the infrared backlight corresponds to 10-step gradation, and the signal to be detected correspond to 40-step gradation. In this case, a width of the effective region is 300-step gradation (= 470 - 160 - 10) (Fig. 12(a)).

Since the signal to be detected accounts for a large portion of the effective region, widening the effective region is considered for enhancing the accuracy in detecting the touched position. As a method to widen the effective region, a method of turning off the white backlight is considered. Using this method, the width of the effective region is 460-step gradation (= 470 - 10) (Fig. 12(b)).

However, in reality, the external light is reflected on the backlight to be incident on the optical sensor, and it is thus necessary to further subtract a light amount of the reflected light in calculating the effective region of the optical sensor. For example, when a transmittance of the liquid crystal panel is 10% and a reflectance of the light on the backlight is 50% and an illuminance of the external light is 100,000 lux, an illuminance of the reflected light of the external light reflected by the backlight is 5,000 lux. When an illuminance of the white backlight is 16,000 lux, a light amount of the reflected light of the external light reflected by the backlight corresponds to 50-step gradation (= 160 × 5000/16000). Therefore, even when the white backlight is turned off, the width of the effective region is in reality only 410-step gradation (= 470 - 50 - 10) (Fig. 12(c)). Upon change in illuminance of the external light, the light amount of the reflected light of the external light reflected by the backlight changes in the range of 0 to 50-step gradation. This amount of change in this gradation is the same level as intensity of the signal to be detected. For this reason, the accuracy in detecting the touched position deteriorates upon change in illuminance of the external light.

In order to solve this problem, the liquid crystal display device according to the present embodiment partially performs black display corresponding to the operating optical sensors. For this reason, the reflected light of the external light reflected by the backlight is prevented from being incident on the optical sensor, and hence the width of the effective region is 460-step gradation (Fig. 12(b)). It is therefore possible to ensure the effective region of the optical sensor and enhance the accuracy in detecting the touched position even in consideration of the reflected light of the external light reflected by the backlight.

As described above, in accordance with the liquid crystal display device according to the present embodiment, black display is partially performed corresponding to the operating optical sensors, whereby it is possible to prevent light reflected inside the display panel (light from the backlight or reflected light of the external light reflected by the backlight) from being incident on the operating optical sensor, so as to widen the effective region of the optical sensor. Moreover, the light amount at the time of turn-on of the infrared backlight and the light amount at the time of turn-off of the infrared backlight are detected to calculate a difference therebetween, whereby it is possible to obtain an input image not influenced by the external light. Further, the white backlight is turned off corresponding to the range including the operating optical sensors in the periods A1 and A2, whereby it is possible to prevent visible light emitted from the white backlight from being incident on the operating optical sensor, so as to reliably widen the effective region of the optical sensor. Moreover, the white backlight that is fully turned on or turned off and the infrared backlight that is fully turned on or turned off are used, whereby it is possible to facilitate configuration of each backlight. Furthermore, the black insertion unit is provided in the drive circuit of the liquid crystal panel, whereby it is possible to facilitate configuration of the liquid crystal display device that partially performs black display. Additionally, the white backlight is fully turned off in a predetermined period during one frame period, whereby it is possible to enhance moving picture display quality as in the case of inserting a black image.

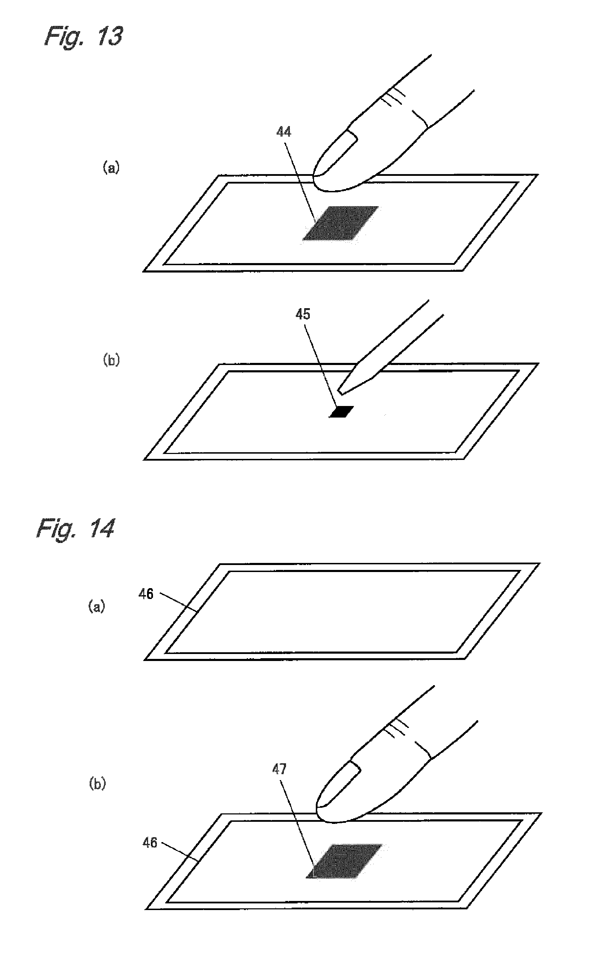

Hereinafter, application examples of the liquid crystal display device according to the present embodiment will be described. As a first application example, there is a method of switching a size of the detection region in accordance with a size of the detection target object (finger, pen, or the like) (see Fig. 13). The size of the detection target object in the input image obtained using the optical sensor may be known depending on a utility form of the liquid crystal display device. For example, it is assumed that it is known that the size of the finger corresponds to (30 × 30) pixels and the size of the pen corresponds to (8 × 8) pixels in the input image. When the finger is to be detected in this case, a detection region 44 is set which has the same size as that of the (30 × 30) sensor pixel circuits, and black display is performed in the detection region 44 (Fig. 13(a)). When the pen is to be detected, a detection region 45 is set which has the same size as that of the (8 × 8) sensor pixel circuits, and black display is performed in the detection region 45 (Fig. 13(b)). Switching the size of the detection region in accordance with the detection target object as thus described allows preferable switching of the range for performing black display, so as to reduce an influence to be exerted on the display in accordance with the detection target object.

As a second application example, there is a method of setting the detection region upon approach of the detection target object to the liquid crystal panel (see Fig. 14). In an initial state, the detection region is not set on a display screen 46, and normal display is performed all over the display screen 46 (Fig. 14(a)). In this state, an approximate touched position is detected in the whole of the display screen 46. When the image processing is performed on the input image in this state and approach of the detection target object is detected, a detection region 47 in accordance with the size and the position of the detection target object is set with respect to the display screen 46 (Fig. 14 (b)). In order to detect a touched position within the detection region 47, black display is performed on the detection region 47. Setting the detection region upon approach of the detection target object to the display panel as thus described allows preferable reduction in influence to be exerted on display in accordance with a distance between the detection target object and the liquid crystal panel.

### (Second Embodiment)

A liquid crystal display device according to a second embodiment of the present invention has the same configuration as that of the liquid crystal display device according to the first embodiment, and operates in a similar manner thereto (see Figs. 1 to 8). The liquid crystal display device according to the present embodiment is different from the liquid crystal display device according to the first embodiment in which both of the two kinds of backlights are fully turned on/ful ly turned off, in that at least one of the two kinds of backlights is partially turned on/turned off. Hereinafter, the differences between the present embodiment and the first embodiment will be described.

The backlight 30 according to the present embodiment has any of a configuration (type A) including the white backlight 31 that is fully turned on/fully turned off and the infrared backlight 32 that can be partially turned on; a configuration (type B) including the white backlight 31 that can be partially turned off and the infrared backlight 32 that is fully turned on/fully turned off; and a configuration (type C) including the white backlight 31 that can be partially turned off and the infrared backlight 32 that can be partially turned on.

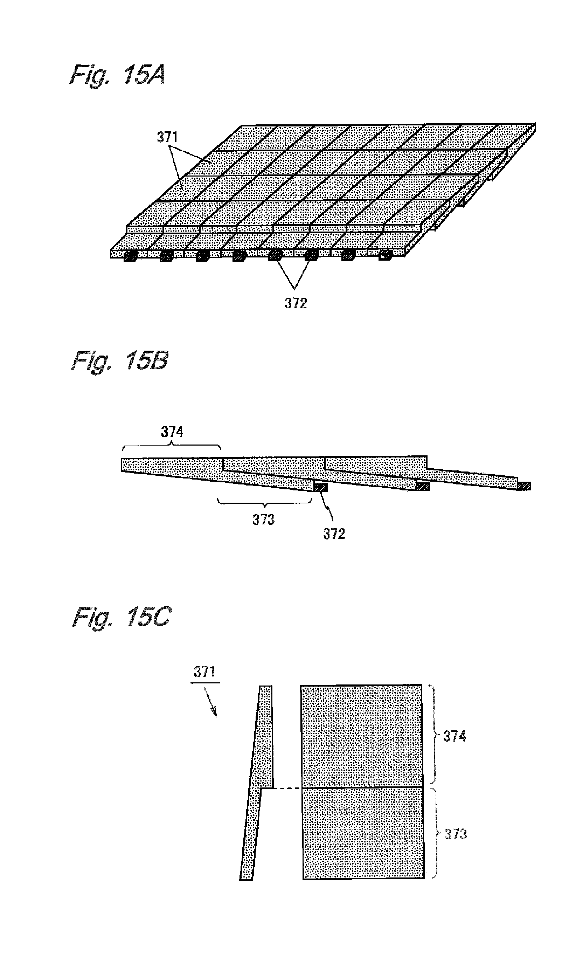

As a backlight that can be partially turned on/partially turned off, a backlight with a tandem structure shown in Figs. 15A to 15C is known. The backlight with the tandem structure is configured by arranging a plurality of tandem-type light guide plates 371 two-dimensionally and providing LEDs 372 with the respective tandem-type light guide plates 371 (Figs. 15A and 15B). The tandem-type light guide plate 371 has a light guiding unit 373 and a light emitting unit 374 (Fig. 15C). The tandem-type light guide plates 371 are arranged so that the light emitting units 374 form one plane, and the LEDs 372 are provided at the end of the respective light guiding units 373.

As the backlight 30, the backlights 30a to 30f shown in Figs. 9A to 9F or ones obtained by modifying those may be used. As the A-type backlight 30, for example, the backlight 30a is used. Alternatively, one obtained by modifying the backlight 30b so that a tandem type is adopted as the infrared backlight 32 may be used. As the B-type backlight 30, for example, one obtained by modifying one of the backlights 30a and 30b so that the tandem type is adopted as the white backlight 31. Alternatively, one obtained by modifying the backlight 30a so that the white LEDs 301 and the infrared LEDs 302 are arranged in opposite positions may be used. In the latter case, as the reflection sheet 315, one that transmits visible light and reflects infrared light is used. As the C-type backlight 30, for example, the backlight 30d is used. Alternatively, one obtained by modifying the backlight 30a so that the tandem type is adopted as the white backlight 31 may be used, or one obtained by modifying one of the backlights 30b, 30c, 30e and 30f so that the tandem type is adopted as the two kinds of backlights may be used.

In the case of using the white backlight 31 that can be partially turned off, the display control circuit 10 outputs a plurality of control signals CSb1, and each control signal CSb1 is made to correspond to a single or a plurality of white LEDs 301. The white backlight 31 is partially turned off in accordance with a plurality of control signals CSb1. In the case of using the infrared backlight 32 that can be partially turned on, the display control circuit 10 outputs a plurality of control signals CSb2, and each control signal CSb2 is made to correspond to a single or a plurality of infrared LEDs 302. The infrared backlight 32 is partially turned on in accordance with the plurality of control signals CSb2.

Also in the present embodiment, as in the first embodiment, the white backlight 31 is turned off in the period A1 (light detection period for the first sensor pixel circuit 26a) and in the period A2 (light detection period for the second sensor pixel circuit 26b), and is turned on in the remaining period. The infrared backlight 32 is turned on in the period A1, and is turned off in the remaining period. However, when the white backlight 31 has a function to be partially turned off, the white backlight 31 is partially turned off corresponding to the detection region in the periods A1 and A2. Further, when the infrared backlight 32 has a function to be partially turned on, the infrared backlight 32 is partially turned on corresponding to the detection region in the period A1. For example, when the display screen 41' shown in Fig. 10 (b) is to be displayed, in the black region 43 corresponding to the detection region 42, the white backlight 31 that can be partially turned off is partially turned off, and the infrared backlight 32 that can be partially turned on is partially turned on.

As thus described, the liquid crystal display device according to the present embodiment is provided with the white backlight 31 that is partially turned off corresponding to the detection region set on the display screen in the periods A1 and A2 or the infrared backlight 32 that is partially turned on corresponding to the detection region set on the display screen in the period A1, or provided with both of the backlights. The white backlight 31 is partially turned off corresponding to the detection region, whereby it is possible to turn on the white backlight 31 and perform display in the regions other than the detection region, so as to reduce an influence to be exerted on the display. Further, the infrared backlight 32 is partially turned on corresponding to the detection region, thereby allowing reduction in power consumption of the infrared backlight 32.

Note that similar application examples to that in the first embodiment can be configured also in the present embodiment. Specifically, in the examples shown in Figs. 13 and 14, the white backlight 31 may be partially turned off and the infrared backlight 32 may be partially turned on in the detection regions 44, 45 and 47 while black display is performed in these detection regions.

### (Third Embodiment)

A liquid crystal display device according to a third embodiment of the present invention has the same configuration as that of the liquid crystal display device according to the first embodiment (see Fig. 1). The liquid crystal display device according to the first embodiment detects a light amount at the time of turn-on of the infrared backlight 32 and a light amount at the time of turn-off of the infrared backlight 32, by means of the two kinds of sensor pixel circuits 26. On the contrary, the liquid crystal display device according to the present embodiment detects a light amount at the time of turn-on of the infrared backlight 32 by means of one kind of sensor pixel circuit 26. Hereinafter, the differences between the present embodiment and the first embodiment will be described.

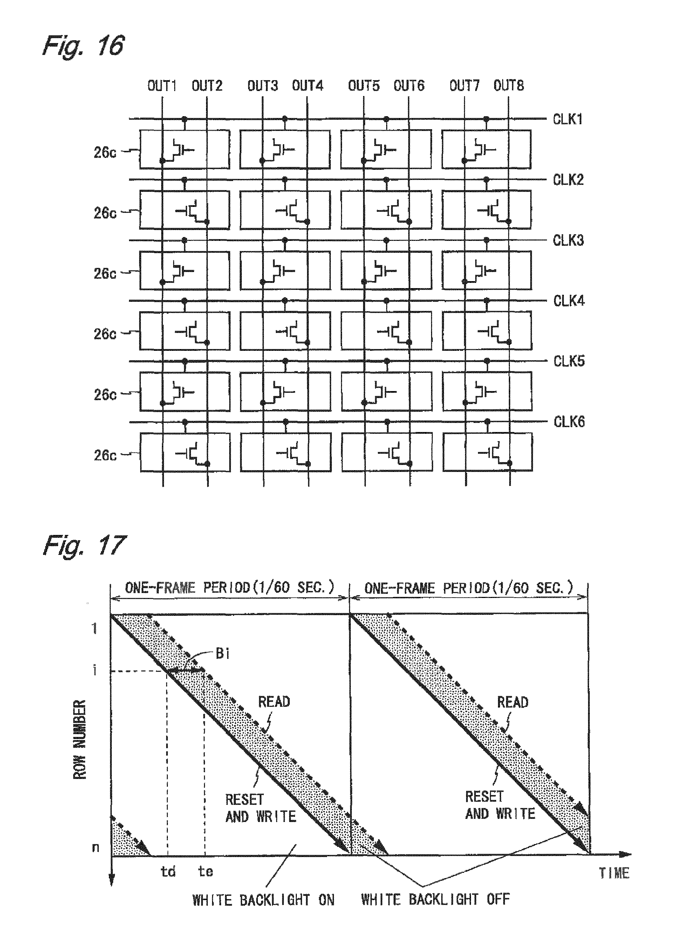

Fig. 16 is a view showing an arrangement of the sensor pixel circuits 26 in the pixel region 21. The pixel region 21 according to the present embodiment is provided with (n × m/2) sensor pixel circuits 26c. As shown in Fig. 16, (n × m/2) sensor pixel circuits 26c are arranged in the vicinity of intersections of odd-numbered clock lines CLK1 to CLKn-1 and odd-numbered output lines OUT1 to OUTm-1, and in the vicinity of intersections of even-numbered clock lines CLK2 to CLKn and even-numbered output lines OUT2 to OUT.

Fig. 17 is a view showing a write timing to the display pixel circuit 25, turn-on and turn-off timings of the white backlight 31, and reset and read timings for the sensor pixel circuit 26c. As shown in Fig. 17, reset for the sensor pixel circuit 26c is performed in a line sequential manner once in one frame period. More specifically, reset for the sensor pixel circuits 26c in the first row is performed first at the beginning of the one frame period, reset for the sensor pixel circuits 26c in the second row is performed next, and thereafter, reset for the sensor pixel circuits 26c in the third and later rows is performed sequentially.

Read from the sensor pixel circuits 26c on an i-th row (i is an integer not smaller than 1 and not larger than n) is performed after the lapse of predetermined time from reset for the sensor pixel circuits 26c in the i-th row. A period from reset to read corresponds to a light detection period for each sensor pixel circuit 26c. For example, in Fig. 17, reset for the sensor pixel circuits 26c in the i-th row is performed at time td, and read from the sensor pixel circuits 26c in the i-th row is performed at time te. The sensor pixel circuits 26c in the i-th row detect light in a period Bi from the time td tc the time te.

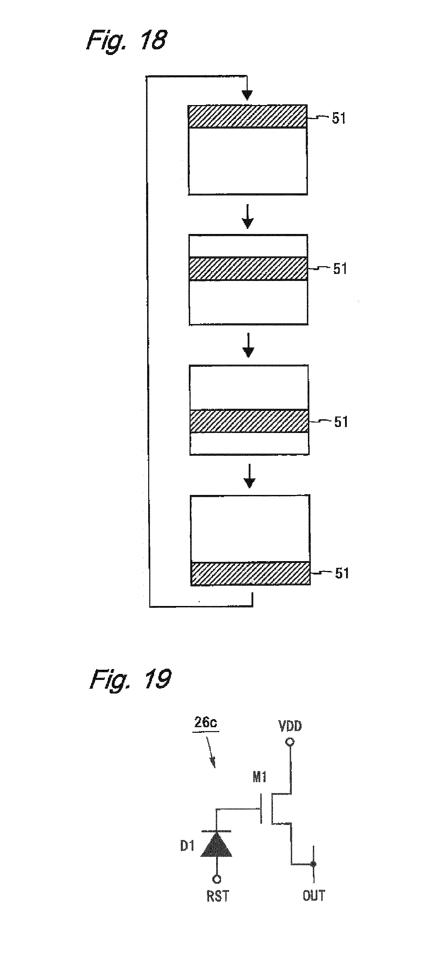

Fig. 18 is a view showing a light detection range by the optical sensor 215. Reset and read are performed for the sensor pixel circuit 26c at the above-mentioned timings, and hence the light detection range by the optical sensors 215 is a band-like region 51 shown in Fig. 18. The band-like region 51 moves downward within the display screen.

The white backlight 31 is partially turned off with respect to the band-like region 51 shown in Fig. 18. It is possible to configure such a white backlight 31, for example, by a similar method to that of the second embodiment. Alternatively, a plurality of cold-cathode fluorescent lamps may be arranged in juxtaposition and those may be sequentially turned off. The infrared backlight 32 is always fully turned on. Write to the display pixel circuit 25 is performed on a portion in which the white backlight 31 is newly turned off as shown in Fig. 17.

Fig. 19 is a circuit diagram of the sensor pixel circuit 26c. As shown in Fig. 19, in the sensor pixel circuit 26c, an anode of a photodiode D1 is connected to a reset line RST, and a cathode thereof is connected to a gate of a transistor M1. A drain of the transistor M1 is connected to a power supply line VDD, and a source thereof is connected to an output line OUT. In the sensor pixel circuit 26c, a node connected to the gate of the transistor M1 serves as an accumulation node that accumulates electric charge in accordance with a detected light amount. The photodiode D1 functions as the optical sensor 215 shown in Fig. 2B. Note that with the sensor pixel circuit 26c being not connected to a read line, it is not necessary to provide a read line to the liquid crystal panel 20 according to the present embodiment.

Also in the liquid crystal display device according to the present embodiment, similarly to the liquid crystal display device according to the first embodiment, one part of the plurality of optical sensors 215 provided on the liquid crystal panel 20 is specified as the operating optical sensors, and the black insertion unit 11 replaces with black data a portion corresponding to the set detection region among video signal Vin. Thereby, black display is partially performed corresponding to the operating optical sensors.

As thus described, in the liquid crystal display device according to the present embodiment, the white backlight 31 is partially turned off corresponding to the band-like region 51 that moves in a predetermined direction within the display screen, and the optical sensors 215 corresponding to the band-like region 51 detect light. Further, this liquid crystal display device partially performs black display corresponding to the operating optical sensors. Therefore, also in the present embodiment, similarly to the first embodiment, it is possible to prevent light reflected inside the liquid crystal panel from being incident on the operating optical sensor, so as to widen the effective region of the optical sensor.

Note that in the above description, it has been assumed that the infrared backlight 32 is always fully turned on. It is thereby possible to facilitate configuration of the infrared backlight 32. In place of this, the infrared backlight 32 may be partially turned on corresponding to the band-like region 51. It is thereby possible to reduce power consumption of the infrared backlight 32.

As for the liquid crystal display device according to each embodiment of the present invention, it is possible to configure a variety of modified examples. For example, the number of the sensor pixel circuits 26 provided in the pixel region 21 may be arbitrary. Further, the black insertion unit 11 may be provided not inside the display control circuit 10, but in a previous stage of the display control circuit 10 or inside the source driver circuit 23. Moreover, in the liquid crystal display device, one frame period may be divided into a first half and a last half, potentials corresponding to a video signal may be written with respect to all the display pixel circuits 25 in the first half of the one frame, and a potential corresponding to black may be written in the display pixel circuits 25 located corresponding to the black region in the last half of the one frame.

Moreover, although the liquid crystal display device is provided with the backlight 30 including the white backlight 31 and the infrared backlight 32 in the above description, the liquid crystal display device may be provided only with the white backlight as the backlight. Also in the liquid crystal display device with the optical sensors which is not provided with the light source for emitting infrared light, but is provided with the light source for emitting visible light, black display is partially performed corresponding to the operating optical sensors, whereby it is possible to prevent light reflected inside the display panel from being incident on the operating optical sensor, so as to widen the effective region of the optical sensor. As thus described, the present invention can be applied not only the display device that detects infrared light, but also the display device that detects external light.

Further, the optical sensor can be formed using polysilicon, microcrystalline silicon, amorphous silicon, or the like. Since these materials have different crystallinities, the optical sensors formed of the respective materials have different sensitivities. Since the optical sensor formed of polysilicon has a wide linear region, it is applicable to a utility form (e.g., mobile use) that requires a wide effective region. The optical sensor formed of microcrystalline silicon has some high sensitivity and some wide linear region, and it is thus applicable to a variety of utility forms. The optical sensor formed of amorphous silicon has high sensitivity, and it is thus applicable to a utility form that requires high sensitivity.

### INDUSTRIAL APPLICABILITY

Since a display device with optical sensors in the present invention has a characteristic that the optical sensors have a wide effective region, it can thus be applied to a variety of display devices such as a liquid crystal display device with optical sensors.

### DESCRIPTION OF REFERENCE CHARACTERS

10: display control circuit
11: black insertion unit
20: liquid crystal panel
21: pixel region
22: gate driver circuit
23: source driver circuit
24: sensor row driver circuit
25: display pixel circuit
26: sensor pixel circuit
30: backlight
31: white backlight
32: infrared backlight
41 and 46: display screen
43: black region
42, 44, 45 and 47: detection region
51: band-like region
215: optical sensor
222: black matrix
224: opening

## Claims

1. A display device provided with a plurality of optical sensors, comprising:
a display panel that includes a plurality of optical sensors arranged two-dimensionally;
a light source that irradiates light on the rear surface of the display panel; and
a drive circuit that drives the display panel based on an input video signal,
wherein one part of the optical sensors is specified as operating optical sensors, and
the drive circuit drives the display panel so as to partially perform black display corresponding to the operating optical sensors.

2. The display device according to claim 1, wherein
a first light source that emits visible light and a second light source that emits infrared light are provided as the light source,
the optical sensors include one that detects light in a first detection period and one that detects light in a second detection period,
the first light source is turned off corresponding to a first range including the operating optical sensors in the first and second detection periods, and
the second light source is turned on corresponding to a second range including the operating optical sensors in the first detection period and fully turned off in the second detection period.

3. The display device according to claim 2, wherein
the first and second detection periods are set to the same length once in one frame period.

4. The display device according to claim 2, wherein
the first light source is fully turned off in the first and second detection periods.

5. The display device according to claim 2, wherein
the second light source is fully turned on in the first detection period.

6. The display device according to claim 2, wherein
the first light source is partially turned off corresponding to the operating optical sensors in the first and second detection periods.

7. The display device according to claim 2, wherein
the second light source is partially turned on corresponding to the operating optical sensors in the first detection period.

8. The display device according to claim 1, wherein
the drive circuit includes a black insertion unit which replaces one part of the input video signal with data for black display, and drives the display panel based on the video signal outputted from the black insertion unit.

9. The display device according to claim 1, wherein
the detection region for specifying the operating optical sensors has a size in accordance with a detection target object.

10. The display device according to claim 1, wherein
the detection region for specifying the operating optical sensors is set upon approach of a detection target object to the display panel.

11. The display device according to claim 1, wherein
a first light source that emits visible light and a second light source that emits infrared light are provided as the light source,
the first light source is partially turned off corresponding to a band-like region that moves in a predetermined direction within a display screen, and
the optical sensors corresponding to the band-like region detect light.

12. The display device according to claim 11, wherein
the second light source is fully turned on.

13. The display device according to claim 11, wherein
the second light source is partially turned on corresponding to the band-like region.

14. The display device according to claim 1, wherein
the optical sensor is formed of amorphous silicon.

15. The display device according to claim 1, wherein
the optical sensor is formed of microcrystalline silicon.

16. The display device according to claim 1, wherein
the optical sensor is formed of polysilicon.
